# FASCICULE DE BREVET EUROPEEN

(11) **EP 0 319 356 B1**
(45) Date de publication et mention de la délivrance du brevet: **19.05.1993**
(21) Numéro de dépôt: 88402799.6
(22) Date de dépôt: 07.11.1988
(51) Int. Cl.: H04H 1/02, H04N 5/268

(54) **Grille de commutation**
Matrix-Schalter
Matrix switch

(30) Priorité: 24.11.1987 FR 8716272
(43) Date de publication de la demande: 07.06.1989
(73) Titulaire: VISICABLE +, F-75739 Paris Cédex 15 (FR)
(72) Inventeur: Grandmougin, Gérard, F-67200 Strasbourg (FR)
(74) Mandataire: Poidatz, Emmanuel

(56) Documents cités:
- EP-A- 0 118 161
- EP-A- 0 152 173
- FR-A- 2 285 758

## Description

La présente invention est relative à une grille de commutation destinée à la distribution sur M sorties au choix d'un signal, notamment vidéo, sélectionné parmi N signaux acheminés à autant d'entrées sur la grille, chacune des M sorties pouvant à volonté être commutée sur une des N entrées en fonction d'un signal de télécommande approprié.

On sait que se développent considérablement à l'heure actuelle les systèmes ou réseaux de distribution de signaux vidéo, à partir de câbles ou de fibres optiques comme par exemple ceux décrits dans le EP-A- 0 118 161 ou le FR-A- 2 285 758, permettant de fournir à un ensemble d'utilisateurs districts, les images de programmes multiples provenant d'émissions simultanées ou pré-enregistrées, distribuées sur le réseau. Ces images sont destinées à être reçues selon un choix quelconque par les utilisateurs, qui peuvent à leur gré sélectionner celle qu'ils souhaitent recevoir sur leur appareil de réception, téléviseur, magnétoscope, moniteur ou autre, selon le cas. De même, pour le distributeur de ces images, il peut être nécessaire de commander et ou de contrôler leur transfert, par example pour percevoir un droit ou péage sur certains programmes, pour contrôler la durée de réception des émissions en vue d'une imputation ou facturation automatique, pour mettre en service ou couper ces programmes à partir d'une commande centralisée..... De manière plus générale, il peut être également avantageux de disposer d'un système en partie interactif, permettant dans une certaine mesure un dialogue conversationnel éventuel avec l'utilisateur, par exemple pour la pratique de sondages, de mesures de taux d'écoute, d'achats ou de commandes directes de produits par le téléviseur, etc...

De même, on conçoit que ces réseaux de distribution avec une grille de commutation du genre ci-dessus, trouvent un intérêt particulier dans le cadre de l'équipement de collectivités telles que groupes d'immeubles, hôtels, hôpitaux..., où il est ainsi possible pour chaque utilisateur de bénéficier des images choisies parmi un nombre élevé de programmes au choix, avec une diversité considérable pour celui-ci, en recevant bien entendu non seulement ces images mais avec celles-ci le son, aussi bien en mono qu'en stéréophonie, voire seulement le son provenant d'autres sources, uniquement auditives (programmes radiophoniques notamment).

On a déjà envisagé, notamment selon le document EP-A-0152173, une grille de commutation pour la distribution sur M sorties au choix d'un signal, notamment vidéo, selectionné parmi N signaux acheminés à des entrées sur la grille, chacune des M sorties pouvant à volonté être commutée sur une des entrées en fonction d'un signal de commande approprié, la grille de commutation comportant au moins un sous-ensemble de cartes de sortie et une structure de support fixe pour un ensemble de cartes d'entrée recevant chacune des signaux, notamment vidéo (V), éventuellement vidéo et/ou audio (A/ V), en nombre correspondant à un sous-multiple donné du nombre total N des signaux à transmettre, ladite structure de support fixe comportant au moins un chassis ou rack contenant le sous-ensemble de cartes de sortie disposées en parallèle. Dans le système de commutation connu, chaque carte d'entrée ne posséde qu'une seule entrée recevant un groupe de plusieurs signaux d'entrée VHF, la grille de commutation permettant de transmettre en sortie sur la ligne de l'utilisateur le groupe de signaux d'entrée qui comporte le signal spécifique recherché par l'utilisateur, l'opération finale de sélection étant réalisée hors de la grille de commutation par un circuit additionnel. La grille de commutation connue du document EP-A-0152173 se présente sous la forme d'une matrice à lignes (cartes de sortie) et à colonnes (cartes d'entrée) interconnectées, permettant d'établir par commande manuelle sur des contacteurs une liaison entre une des entrées et une des sorties (la ligne de l'utilisateur prédéterminé). Toutefois les systèmes de commutation actuellement disponibles sont en général compliqués et volumineux, plutôt coûteux et d'un emploi relativement complexe, rendant plus difficile non seulement leur utilisation mais surtout leur installation dans des conditions d'efficacité maximale.

On connait par ailleurs, par la demande de brevet PCT/FR 88-00046 (WO 88/05979) (EP-A-0 300 016) un procédé et un dispositif qui permettent une transmission simple et sûre , en particulier sans dégradation du signal, d'une image vidéo ou autre, provenant d'une source quelconque (téléviseur, magnétoscope, caméra, récepteur d'émission TV ou par satellite, voire moniteur d'ordinateur, etc...) jusqu'à un récepteur situé à distance, par une ligne bifilaire constituée de deux fils de très petite section, en pratique inférieure au millimètre et qui est par conséquent très discrète, souple, facile à monter et à dissimuler sur son parcours, sans exiger des travaux d'installation du genre de ceux qui sont au contraire nécessaires si le signal vidéo doit être transmis par câble coaxial. Ainsi, grâce à ce procédé, à partir d'une source quelconque située à distance (pouvant atteindre jusqu'à 300 mètres ou plus), on peut transmettre tout type de signal vidéo en n'importe quel standard (PAL, SECAM, D₂ MAC PAQUET ...), vers un poste de réception approprié, le système étant conçu de telle sorte que les commandes de la source (marche, arrêt, le cas échéant retour en arrière, arrêt sur image, enregistrement, réglage des niveaux son, lumière ou contraste...) puissent être télécommandées depuis le poste récepteur par l'utilisateur lui-même, qui se sert en sens inverse de la même ligne bifilaire transmettant les signaux vidéo pour acheminer les signaux de télécommande nécessaires.

La présente invention a pour objet une grille de commutation qui répond aux impératifs précités, notamment par la mise en oeuvre du procédé ci-dessus pour la transmission du signal délivré, en permettant d'amener sur une ligne de sortie quelconque, choisie parmi un nombre donné de celles-ci, un signal vidéo sélectionné dans un ensemble de signaux différents provenant d'un réseau commun, qui soit simple, peu coûteuse, sûre et qui puisse assurer à la demande, au gré de l'utilisateur, les commutations souhaitées par celui-ci.

La grille de commutation selon l'invention est par ailleurs conçue de façon à éviter les diaphonies entre les signaux vidéo qui transitent par les connexions de celle-ci, ces signaux étant transmis sans distorsion ou affaiblissement dans une bande de fréquence pouvant aller de quelques dizaines de Hz à 30 MHz ou plus, la grille se présentant enfin avec une structure compacte et modulable, sans limitation du nombre N des entrées recevant les signaux à transmettre et du nombre M de sorties affectées aux utilisateurs et recevant chacune au choix, l'un quelconque de ces signaux.

Plus particulièrement, l'invention propose une grille de commutation pour la distribution sur M sorties au choix d'un signal, notamment vidéo, sélectionné parmi N signaux acheminés à des entrées sur la grille, chacune des M sorties pouvant à volonté être commutée sur une des entrées en fonction d'un signal de commande approprié, la grille de commutation comportant au moins un sous-ensemble de cartes de sortie et une structure de support fixe pour un ensemble de cartes d'entrée recevant chacune des signaux, notamment vidéo éventuellement vidéo et/ou audio, en nombre correspondant à un sous-multiple donné du nombre total N des signaux à transmettre, ladite structure de support fixe comportant au moins un chassis ou rack contenant le sous-ensemble de cartes de sortie disposées en parallèle, la grille étant caractérisée en ce qu'elle comporte de plus au moins un ensemble de cartes de commutation, dont chacune est réunie à une carte d'entrée pourvue d'autant d'entrées que de signaux reçus par carte d'entrée, toutes les cartes de sortie d'un sous-ensemble, en nombre égal à un sous-multiple du nombre total M de sorties, étant réunies audit ensemble des cartes de commutation, chaque carte de sortie délivrant à un utilisateur un signal quelconque sélectionné parmi les signaux reçus par chaque carte de commutation à partir de la carte d'entrée associée, les cartes de commutation comportant un ensemble de cellules d'entrée montées en parallèle, en nombre égal au sous-multiple définissant le nombre de signaux à transmettre reçus par une carte d'entrée, et un ensemble de cellules de sortie, en nombre égal au sous-multiple donné par les cartes de sortie, chaque cellule d'entrée et chaque cellule de sortie étant réunies par une cellule de commutation, laissant passer un signal sélectionné de l'entrée vers la sortie sous l'effet d'un ordre de commande délivré par l'utilisateur, transitant par la carte de sortie associée à celui-ci, via une carte de traitement commune à l'ensemble des cartes de commutation, cette carte de traitement commandant un étage de conversion des ordres reçus, ledit chassis ou rack contenant ledit ensemble de cartes de commutation montées en parallèle et le sous-ensemble de cartes de sortie également parallèles mais disposées perpendiculairement aux cartes de commutation, le point contact des bords ou arêtes de chaque carte de commutation avec la carte de sortie correspondante assurant la liaison
entre une cellule de sortie sur la carte de commutation et un circuit de sélection prévu sur la carte de sortie ainsi réuni.

Ainsi, l'incorporation dans la grille de commutation selon l'invention, d'un ensemble de cartes de commutation entre les cartes d'entrée et les cartes de sortie, elle-mêmes commandées à partir d'une carte de traitement en réponse à des signaux de télécommande délivrés par l'utilisateur, permet de travailler directement sur un signal d'entrée unitaire et d'obtenir de façon aisée pour l'utilisateur, directement en sortie de grille le signal vidéo et/ou audio choisi par lui.

Selon une caractéristique particulère, la carte de traitement est parallèle aux cartes de commutation par une arête avec les cartes de sortie.

De préférence, la sortie du circuit de sélection est reliée à un circuit émetteur restituant sur deux conducteurs distincts les signaux respectivement audio et vidéo avant transmission de ceux-ci sur une ligne bifilaire les acheminant à distance vers un récepteur approprié. Notamment, la grille de commutation selon l'invention met avantageusement en oeuvre en ce qui concerne l'émetteur, le récepteur et la ligne bifilaire qui les relient les dispositions de la demande de brevet précitée.

Selon une autre caractéristique également, chaque carte de commutation dans un sous-ensemble est réunie à la sortie d'une carte d'entrée par un câble coaxial adapté, les câbles acheminant chacun un signal reçu par la carte d'entrée vers chacune des cartes de commutation du sous-ensemble correspondant, l'adaptation du câble réalisée à ses extrémités par la carte d'entrée et une résistance terminale respectivement.

D'autres caractéristiques d'une grille de commutation selon l'invention apparaîtront encore à travers la description qui suit d'exemples de réalisation, donnés à titre indicatif et non limitatif, en référence aux dessins annexés sur lesquels :
- La Figure 1 est une vue en perspective partielle illustrant la structure de support d'une partie des diverses cartes entrant dans la réalisation de la grille selon l'invention.
- La Figure 2 est une vue également en perspective plus schématique, montrant l'association dans le support de plusieurs châssis ou racks distincts réunis en parallèle par des câbles coaxiaux de liaison avec une quelconque des cartes d'entrée.
- La Figure 3 est un schéma de principe du fonctionnement électronique de la grille de commutation pour l'acheminement de signaux depuis une carte d'entrée vers une carte de sortie sur une ligne bifilaire de transmission.
- La Figure 4 est un schéma de principe d'une fraction de la matrice réalisée dans la grille de commutation selon l'invention.
- La Figure 5 est un schéma électronique d'une cellule d'entrée de la matrice de la Figure 4, dans un mode de réalisation particulier.
- La figure 6 est un schéma électronique d'une cellule de commutation de la matrice, associée à la cellule d'entrée de la Figure 5.
- La figure 7 est un schéma simplifié permettant de mieux comprendre le fonctionnement de la cellule de commutation de la Figure 6.
- La Figure 8 est un schéma électronique d'une cellule de sortie de la matrice selon la Figure 4.
- La Figure 9 est un schéma de l'étage de conversion des signaux de commande des cellules de commutation de la matrice.
- La Figure 10 est un schéma électronique du circuit de sélection d'entrée d'une carte de sortie.
- La Figure 11 est une vue d'une variante de réalisation du schéma électronique de la grille de commutation comportant diverses variations vis-à-vis de celui illustré sur la figure 3.
- La Figure 12 est un schéma de principe d'une variante du circuit de sélection d'une carte de sortie.
- La Figure 13 est un schéma illustrant une variante de l'étage de conversion, adaptée au schéma selon la figure 11.
- La Figure 14 illustre un schéma de principe d'un circuit décodeur, également utilisé dans la même variante.

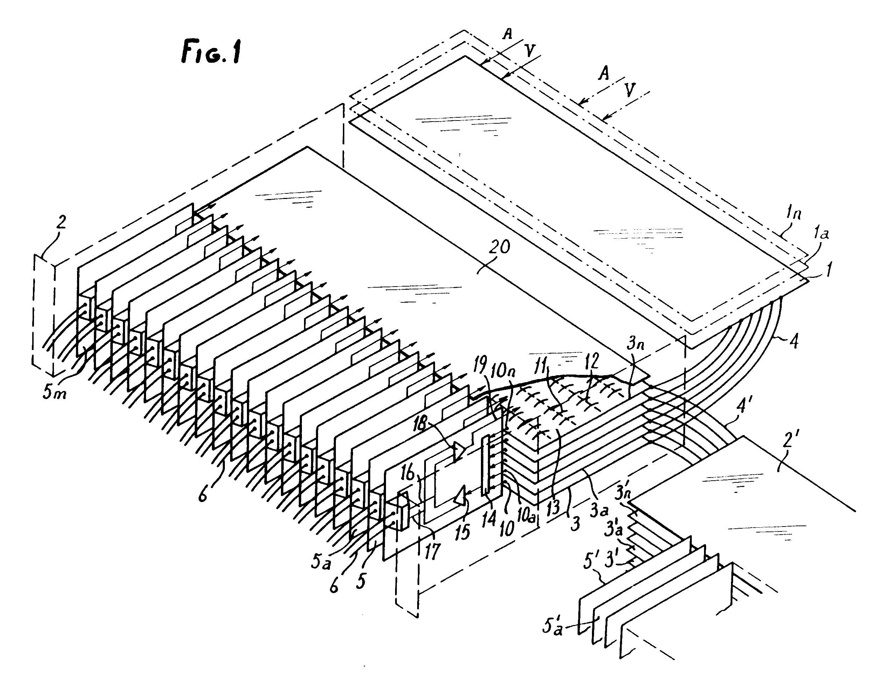

La Figure 1 illustre schématiquement le montage relatif dans une structure de support fixe des diverses cartes d'entrée, de commutation, de sortie et de traitement, entrant dans la réalisation de la grille de commutation selon l'invention. Le système comporte ainsi un premier ensemble de cartes tel les que 1, 1a,...1n, dites cartes d'entrée, pour des signaux vidéo V et audio A par exemple, délivrés sur les entrées de ces cartes 1 en provenance d'un ensemble de câbles coaxiaux ou d'un faisceau de fibres optiques classiques (non représentés). Ces signaux respectivement audio et vidéo sont, s'il y a lieu, préalablement traités par des étages démodulateurs et adaptateurs appropriés (également non représentés mais bien connus dans la technique), ces signaux vidéo et audios étant ainsi fournis en bande de base.

Les signaux ainsi amenés aux cartes d'entrée, constituent donc un ensemble de n signaux, qui sont répartis en groupes distincts formant chacun un sous-multiple donné de N, chaque groupe de signaux intéressant ainsi une carte d'entrée telle que 1, 1a, ... 1n. A noter que ces signaux peuvent être indépendants ou plus généralement être exploités au moins deux par deux, en particulier lorsqu'ils s'agit de transmettre une image de télévision où le signal vidéo est nécessairement accompagné d'un signal audio associé. Egalement, on peut envisager qu'un même signal vidéo soit associé à deux signaux audio correspondant à une transmission du son stéréophonique. En revanche, on peut également envisager que le signal à l'entrée soit seulement un signal audio, mono ou stéréo, la grille permettant la transmission vers les utilisateurs de signaux quelconques, vidéo ou audio, voire autres, la nature particulière de ces signaux étant en réalité indifférente à la mise en oeuvre particulière de l'invention, sauf à envisager un traitement préalable éventuel de ces signaux pour les disposer à l'intérieur d'une bande de fréquence appropriée comprise ici entre quelques dizaines de Hz et 30 MHz ou plus.

Chacune des sorties de chaque carte d'entrée 1, 1a, ... 1n, est alors raccordée à l'intérieur d'un châssis ou "rack" de support 2 de la grille, à l'entrée d'une carte de commutation parmi un sous-ensemble de telles cartes, respectivement 3, 3a, ... 3n, superposées. Pour les cartes d'entrée 1 comme pour les cartes de commutation 3, la référence n représente notamment un sous-multiple donné du chiffre N, correspondant à l'ensemble des signaux à traiter.

Ainsi et pour fixer les idées dans un exemple de réalisation particulier mais non limitatif de la grille de commutation considérée, celle-ci est prévue pour traiter à l'entrée en provenance du réseau, un nombre N de signaux égal à quarante-huit, chacun d'eux correspondant à un signal audio seul ou à un signal vidéo combiné à un, voire à deux, signaux audio associés comme précisé plus haut. Les cartes d'entrée 1, 1a, ... 1n, sont ici prévues pour traiter chacune huit signaux du genre précédent, ce qui signifie, par voie de conséquence, que le sous-multiple n correspond dans cet exemple au chiffre six. En d'autres termes, on dispose donc de six cartes d'entrées 1 et, par sous-ensemble de six cartes de commutation 3, ces dernières étant représentées sur la Figure 1, tandis que pour les cartes d'entrée 1, seule apparaît la carte 1 en traits pleins, les cartes 1a ... 1n étant figurées en traits mixtes.

La liaison entre une quelconque des cartes 1 et les cartes de commutation 3, 3a ... 3n pour chacun des signaux à transmettre est réalisée au moyen d'un câble coaxial 4, acheminant le signal à traiter vers un étage d'entrée E prévu sur la carte 3 correspondante et dont le détail de réalisation sera précisé plus loin. Chaque câble 4 est adapté en impédance à ses deux extrêmités.

Les cartes de commutation 3 sont par ailleurs réunies à un sous-ensemble de cartes de sorties 5, 5a, ... 5m, permettant de recueillir l'un quelconque des signaux traités dans la grille et de l'acheminer, par l'intermédiaire d'une ligne bifilaire 6 de petite section vers un récepteur approprié (non représenté), la transmission et la réception du signal s'effectuant, à l'entrée et à la sortie de la ligne 6 de préférence conformément aux dispositions décrites et revendiquées dans la demande déjà citée. Avantageusement, les composants montés sur chaque carte de commutation sont disposés dans une zone située dans le prolongement de la carte de sortie associée.

Le sous-ensemble constitué par les cartes de sortie 5, 5a ... 5m associées aux cartes de commutation 3 dans chaque élément du rack 2, correspond aussi à un sous-multiple mais ici du nombre total M des utilisateurs de la grille, chacune de ces cartes 5 pouvant indépendamment, sélectionner sur une ligne bifilaire 6 lui étant attribuée, un signal d'entrée quelconque reçu par la grille et également transmettre en sens inverse par l'intermédiaire de cette même ligne 6, un ordre de télécommande provoquant la commutation souhaitée, c'est-à-dire l'établissement de la liaison nécessaire entre l'entrée recevant le signal sélectionné et la ligne de sortie correspondant à l'utilisateur donnant l'ordre précité.

Dans l'exemple décrit à titre indicatif, le sous-multiple m correspondant aux cartes de sorties 5 est choisi égal à vingt, ce qui correspond au montage dans le rack 2 de vingt cartes 5, respectivement donc repérées 5, 5a ... 5m.

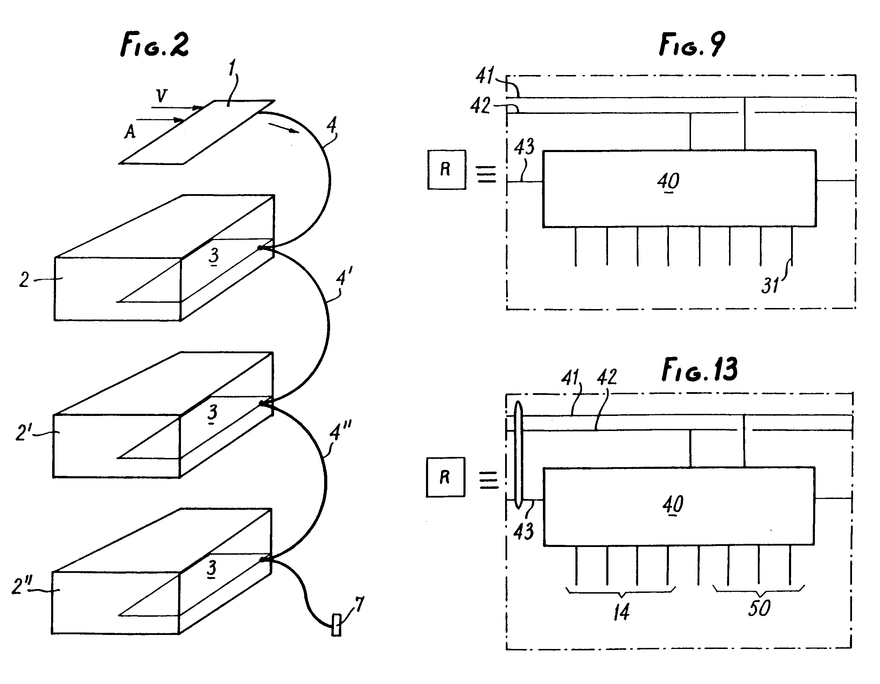

Il y a lieu toutefois de noter dès à présent que la grille de commutation selon l'invention n'est pas, bien évidemment, limitée, dans sa réalisation pratique, au montage de vingt cartes de sorties seulement mais pourrait être prévue pour un nombre plus élevé de celles-ci sans limitation particulière. Dans cette hypothèse cependant, le rack 2 contenant les six cartes de commutation 3 et les vingt cartes de sorties 5, comme illustré sur la Figure 1, sera associé à un second rack 2′, comportant à son tour six cartes de commutation 3′, 3′a, ... 3′n, et à nouveau vingt cartes de sortie respectivement 5′, 5′a, ... 5′m et ainsi de suite. Par exemple, pour délivrer les quarante-huit signaux d'entrée sur soixante lignes de sorties et autant d'utilisateurs, on adoptera trois racks successifs 2, 2′, 2˝ (Figure 2), comportant chacun vingt cartes de sortie 5 et six cartes de commutation 3. L'ensemble des racks ainsi constitué sera à son tour associé à six cartes d'entrée 1, chacune d'elles traitant huit signaux délivrés par huit câbles coaxiaux 4, successivement à chaque rack de l'ensemble. Dans ce cas, en effet, comme schématisé sur la Figure 1, mais comme on le voit plus clairement sur la Figure 2, les câbles coaxiaux 4 acheminant les signaux depuis les cartes d'entrée 1 vers les cartes 3, 3a ... 3n dans chaque rack, se raccordent d'un rack à l'autre par des prolongateurs 4′, 4˝ réunissant en parallèle les cartes de commutation respectives, ces câbles 4 et leurs prolongateurs 4′, 4˝ respectifs, étant soigneusement adaptés en impédance à leurs deux extrêmités, d'une part par la carte 1 associée et d'autre part par une résistance terminale 7 appropriée.

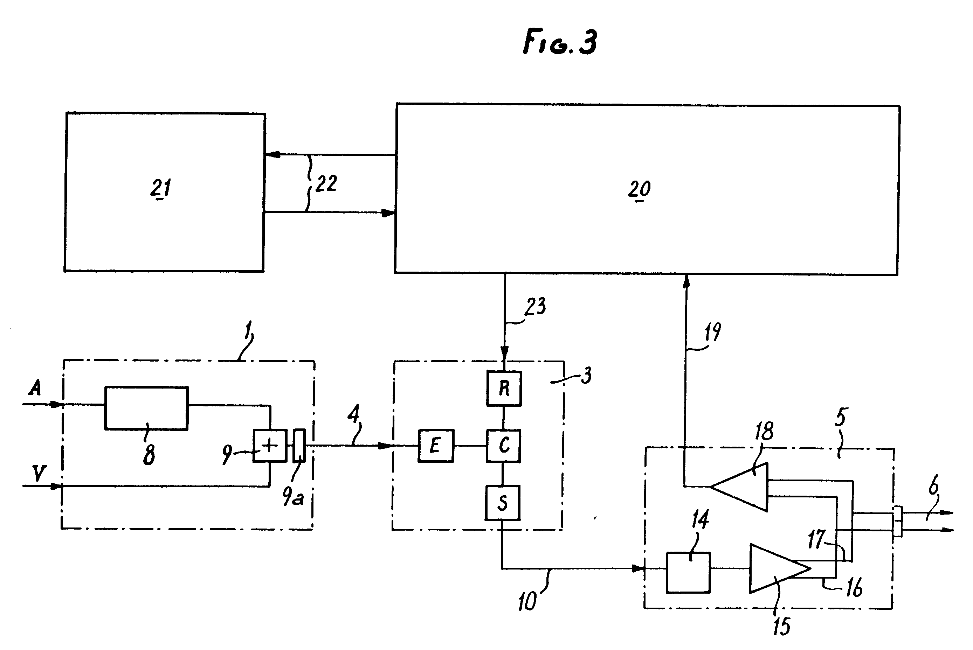

La Figure 3 illustre le schéma de la liaison établie entre une entrée quelconque dans une carte d'entrée 1 donnée, par exemple un signal vidéo V ici associé à un signal audio A, jusqu'à une carte de sortie 5 et de celle-ci à une ligne de transmission 6, à travers une carte de commutation 3.

Dans la carte 1, le signal audio A est préalablement modulé par un circuit 8 tandis que le signal vidéo V, superposé, amené à la carte en bande de base, est repris tel quel. Les deux signaux sont ensuite amenés à un circuit additionneur 9, suivi d'un étage d'adaptation 9a avant transmission par le câble 4 à l'une quelconque des cartes 3, les signaux A et V considérés étant, en parallèle, transmis à l'ensemble des cartes de commutation 3 du rack 2, voire des racks en parallèle 2′, 2˝, par autant de câbles 4, respectivement 4′, 4˝. A la sortie de la carte de commutation 3 considérée, le signal est transmis à la carte de sortie 5 qui, conformément à une caractéristique particulière de la grille selon l'invention, est disposée dans le rack 2 (respectivement 2′ ou 2˝ selon le cas) de telle sorte que son plan soit perpendiculaire à celui de la carte de commutation 3 associée, comme l'illustre notamment la Figure 1. Ce montage particulier des cartes 3 et 5 permet notamment, outre de procurer un gain de place appréciable dans le rack, en associant directement aux six cartes 3 de l'exemple considéré, vingt cartes 5, parallèles respectivement entre elles dans chacun des sous-ensembles correspondants, de limiter au seul point de contact mutuel des arêtes ou bords de chacune de ces cartes la liaison électrique nécessaire au passage du signal de l'une à l'autre carte. Sur le schéma de la Figure 3, ce point de contact 10 est représenté sous la forme d'un conducteur pour faciliter le tracé mais correspond en réalité à une liaison ponctuelle directe de l'une à l'autre carte comme on le voit notamment sur la Figure 1. Avantageusement et comme le montre également cette Figure 1, chaque carte de commutation 3 comporte sur l'une de ses faces un plan de masse 11 sur lequel sont implantés les composants et les "straps" de liaison 12, tandis que les conducteurs de sortie 13 et les soudures correspondantes sont constitués par des pistes d'un circuit imprimé s'étendant sur l'autre face de la carte, de préférence selon une direction perpendiculaire aux straps 12. Ces dispositions permettent notamment de réduire dans une mesure importante les effets de diaphonie entre signaux reçus simultanément par la carte 3 d'une part en faisant écran entre les entrées et les sorties respectivement, et d'autre part en réduisant les effets des courants de masse. Dans la carte 5, le signal reçu traverse un circuit de sélection 14 dont le détail sera explicité plus loin, suivi d'un étage émetteur 15 restituant sur des conducteurs 16 et 17 les signaux respectivement audio A et vidéo V, finalement recueillis sur la ligne bifilaire 6 à la sortie de la carte.

Selon une caractéristique particulière de l'invention et dans un mode de réalisation préféré de celle-ci, qui n'a cependant pas en soi un caractère nécessaire, d'autres dispositions équivalentes peuvent selon le cas être envisagées, le circuit émetteur 15 correspondent à l'ensemble émetteur décrit et représenté en référence notamment aux Figures 2 et 3 de la demande de brevet déjà citée. Notamment, un tel circuit est prévu, selon cette demande qui à ce titre doit être considéré comme faisant partie de la présente description, pour assurer la transmission sur une ligne de liaison bifilaire d'un signal en particulier vidéo, en alimentant la ligne par au moins un générateur de courant qui débite symétriquement sur les fils, en étant commandé en tension par le signal à transmettre, la ligne étant adaptée à chacune de ses extrêmités par une impédance égale à son impédance caractéristique. Plus particulièrement, et toujours par référence à la demande précitée, le circuit 15 comporte deux générateurs de courants disposés en série avec deux résistances égales, dont le point milieu est réuni à la masse par une capacité, les signaux délivrés alimentant respectivement la ligne à travers les enroulements de transformateurs symétriques, montés en série chacun avec un des fils de la ligne.

Sur cette même ligne bifilaire 6, sont également acheminées en sens inverse et selon une caractéristique additionnelle du dispositif décrit dans la demande précitée, les informations de télécommande nécessaires au fonctionnement de la grille, celles-ci se présentant sous la forme d'impulsions émises par l'utilisateur auquel est ainsi attribuée une carte de sortie 5, ces impulsions étant renvoyées en sens inverse des signaux reçus, vers un circuit de traitement 18 délivrant en 19 une impulsion appropriée. Celle-ci est ainsi acheminée à l'entrée d'une carte complémentaire 20, dite de traitement, montée dans le rack 2 de façon séparée des cartes de commutation 3, de préférence parallèlement à celles-ci.

Comme le montre la Figure 1, le point de contact 19 entre les cartes 5 et la carte de traitement 20 est réalisé de la même manière que le point 10 pour les cartes de commutation 3, par une liaison ponctuelle au contact des arêtes perpendiculaires de ces cartes, ce point de contact étant représenté sur le schéma de la Figure 3 sous la forme d'un conducteur pour en faciliter la représentation. Le circuit de traitement 18 est de préférence conforme également aux dispositions déjà décrites dans la demande antérieure mentionnée plus haut, et comporte notamment un étage différentiel, un filtre passe bande et un démodulateur suivi d'un amplificateur éventuel, les signaux de télécommande ainsi traités étant préalablement reçus par la ligne bifilaire 6 en provenance d'une source adéquate (générateur infra-rouge ou autre) commandant un générateur de courant à fonctionnement symétrique disposé en parallèle sur la ligne avec le récepteur des signaux vidéo et/ou audio fournis.

Sur la Figure 3 enfin, on a représenté schématiquement la carte de traitement 20, celle-ci comportant notamment un circuit du genre à microprocesseur, qui décode les informations de télécommande reçues par les liaisons 19 et l'envoi d'un signal de commande approprié vers les cartes 3, via des conducteurs 23. Dans chacune des cartes 3 sont par ailleurs prévues entre chaque câble 4 amenant un signal donné à celle-ci et le point de sortie 10 avec la carte 5, une cellule d'entrée E, et une cellule de sortie S, ces deux cellules étant réunies par une cellule de commutation C, ouverte ou fermée selon l'ordre de commande reçu de la carte de traitement 20 à travers un étage de conversion R qui lui est associé. Une liaison 22 réunit éventuellement les cartes 20 de la grille à un circuit extérieur 21, permettant d'effectuer des opérations complémentaires de comptage ou d'émettre des signaux d'interdiction dans certaines conditions particulières d'utilisation.

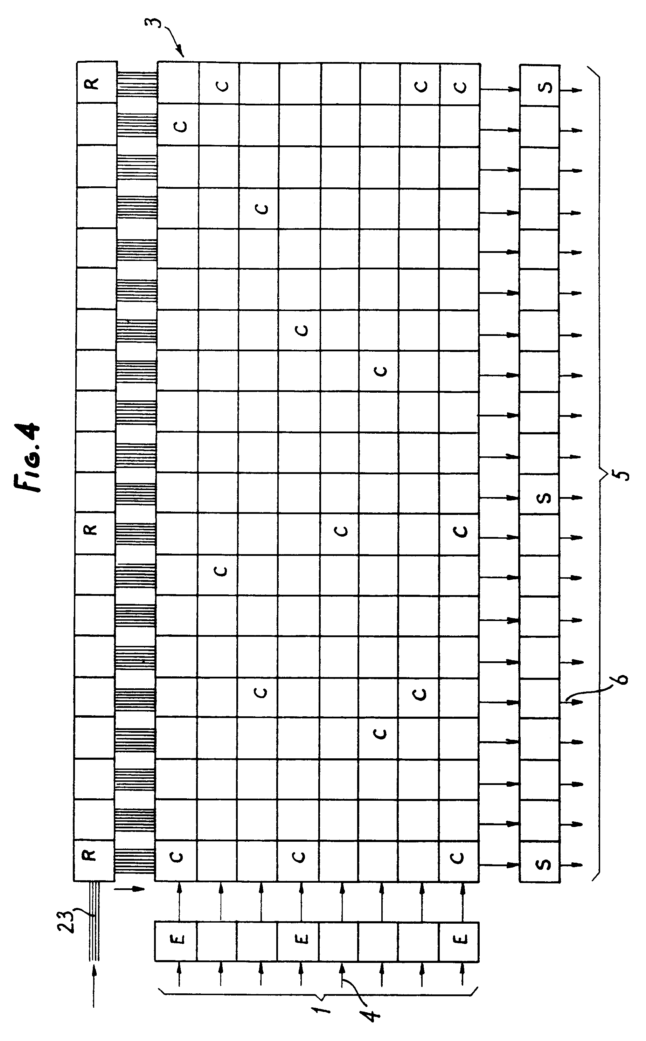

La Figure 4 illustre le schéma d'une fraction de la matrice réalisée dans la grille au moyen de l'ensemble des cellules E et S via les cellules de commutation C, ces dernières étant réunies en lignes et en colonnes respectivement à ces cellules d'entrée et de sortie de la façon ainsi représentée. Comme il résulte à ce propos de la description qui précède et des explications déjà données, les cellules E et S sont respectivement ici au nombre de huit pour les premières et de vingt pour les secondes, dans l'exemple plus particulièrement considéré, où chaque carte de commutation 3 reçoit en effet d'une même carte d'entrée, huit signaux distincts parmi quarante huit possibles, alors que le sous-ensemble des six cartes de commutation 3, recevant chacune ces huit signaux, est associé à vingt carte de sortie 5. Le schéma de la Figure 4 ne représente donc en réalité qu'une partie de la matrice totale, celle-ci comportant en fait ici six fois plus d'entrées (correspondant aux six cartes d'entrées 1, 1a ... 1n) et trois fois plus de sorties (pour un total supposé de soixante utilisateurs) correspondant aux trois racks en parallèle 2, 2′, 2˝.

En ce qui concerne les étages de conversion R, ceux-ci sont agencés dans l'exemple envisagé, pour réaliser une conversion série-parallèle des signaux reçus et disposés selon les colonnes de la fraction de matrice représentée, chaque étage intéressant ainsi les cellules de commutation C d'une colonne, dans chaque carte de commutation 3 d'un même rack.

Dans l'agencement correspondant au dessin, le montage en parallèle des six cartes de commutation et leur liaison en 10 avec le circuit de sélection 14 de chacune des cartes de sortie 5 revient à fractionner la matrice en pratique en dix huit sous-ensembles distincts (six fois trois) donc en réalité un seul apparaît sur le schéma de la Figure 4. Chaque colonne de la matrice est réservée à un utilisateur qui, par la carte 5 et dans celle-ci par le circuit 18, envoie à l'une des trois cartes de traitement 20 (une par rack) associée, les ordres de télécommande, assurant la sélection de la ligne correspondant au signal vidéo choisi et sa restitution sur la colonne de la matrice qui correspond à l'utilisateur correspondant. A chaque fois, le système permet donc de commander la grille en autorisant pour chaque utilisateur un choix de l'un quelconque des signaux parmi les quarante huit disponibles, sans altérer ou déformer le signal sélectionné dont les performances de linéarité et la réponse en fréquence restent excellentes et surtout sans aucune possibilité d'interférence d'une ligne de sortie à une autre, chacune de celles-ci étant entièrement découplée vis-à-vis de celles qui sont affectées à d'autres utilisateurs.

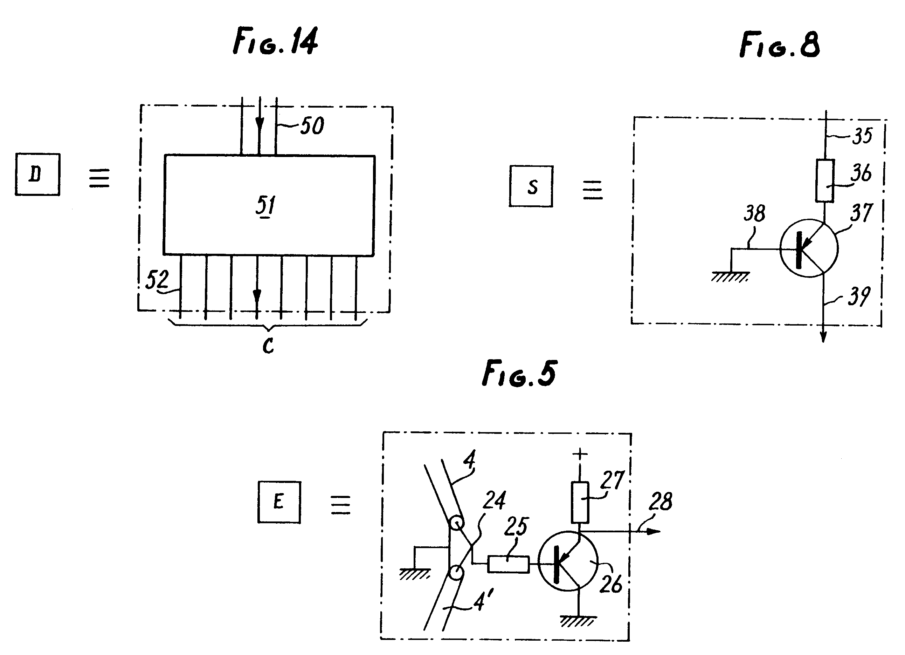

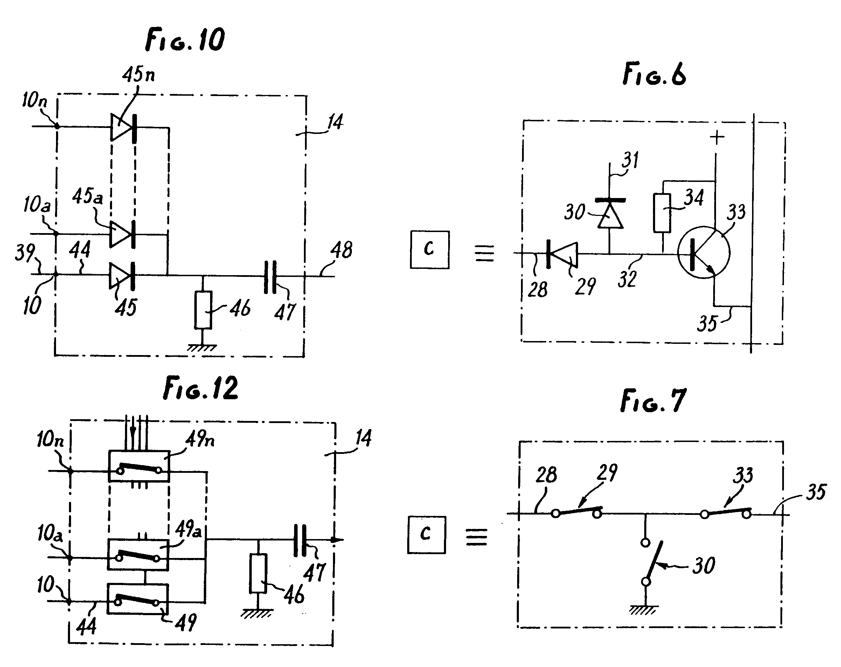

Les Figures 5, 6 et 8 illustrent, dans une première variante de réalisation, la structure des cellules E, C et S respectivement, la Figure 7 facilitant la compréhension du fonctionnement de la cellule de commutation C selon la Figure 6.

Sur la Figure 5, qui illustre une des cellules d'entrée E, on a représenté au point 24 de liaison des câbles coaxiaux 4 et 4′ avec une des cartes de commutation 3, amenant à celle-ci l'un des signaux reçu de la carte d'entrée 1 associée, une résistance 25 de faible valeur réunie à un transistor de sortie 26 polarisé par une résistance 27 et fournissant à basse impédance un signal de sortie, propre à alimenter, en parallèle, par un conducteur 28 l'ensemble des cellules de commutation C situé sur une même ligne de la fraction de matrice de la Figure 4. Ce conducteur 28 correspond sur la vue de la Figure 1 aux straps 12 ici représentés.

Le signal ainsi recueilli à l'entrée d'une cellule C quelconque ne franchit pas normalement celle-ci, du moins tant que l'ordre de commutation issu de l'étage R et adressé à la cellule concernée n'est pas reçu par cette dernière. A cet effet, celle-ci, dont le schéma apparaît sur la Figure 6, reçoit le signal par le conducteur 28 qui franchit ou non la diode 29 selon que celle-ci est ou non bloquée en fonction de l'état d'une autre diode 30 réunie par un conducteur 31 à l'étage de conversion R des signaux de télécommande. Si la diode 29 est conductrice, le signal reçu alimente par un conducteur 32, un transistor 33 polarisé par une résistance 34 et qui délivre en 35 le signal amplifié. Celui-ci alimente alors la cellule de sortie S (Figure 8) à travers une résistance 36 et un transistor 37 dont la base est à la masse par un conducteur 38. Le signal de sortie sur le collecteur du transistor est enfin acheminé par un conducteur 39 vers la carte de sortie 5 correspondant au point de contact 10 de celle-ci avec la carte de commutation 3.

La Figure 7 schématise le fonctionnement de la cellule de commutation C entre l'entrée 28 et la sortie 35, les diodes 29 et 30 et le transistor 33 jouant le rôle d'interrupteurs à commande synchronisée, tels que les interrupteurs 29 et 33 soient simultanément ouverts lorsque 30 est fermé et vice-versa. En effet, quelle que soit la qualité des composants utilisés, subsiste en parallèle sur les bornes de ceux-ci une capacité parasite, à travers laquelle peut s'établir en position d'ouverture des interrupteurs 29 et 33, un courant de fuite, de sorte que, si l'interrupteur 30 n'existait pas, un résidu de signal serait encore transmis au conducteur de sortie 35, perturbant le fonctionnement du système. Grâce en revanche à l'interrupteur 30, lorsque 29 (et 33) sont ouverts, 30 étant fermé, le courant de fuite éventuel à travers la capacité parasite établie sur 29 est dérivé vers la masse, aucun signal n'étant délivré au conducteur de sortie 35. C'est donc exactement sur ce principe que fonctionne le circuit de la Figure 6, avec les avantages qui en découlent quant à la fermeture ou l'ouverture, strictement par "tout ou rien" de la cellule de commutation correspondante.

La Figure 9 illustre pour sa part le détail, dans le même mode de réalisation, de l'étage de conversion R recevant de la ligne 6 via la carte de sortie 5 associée à celle-ci, les ordres de commande pour la commutation souhaitée d'une quelconque des cellules C de la colonne correspondante, au niveau de la ligne de la matrice recevant le signal d'entrée à transmettre.

Les signaux de télécommande sont notamment décodés dans la carte de traitement 20 où ils arrivent par le conducteur 19 (Figure 3), et traités par un microprocesseur qui après sélection de l'adresse de la cellule C à commuter, envoie vers celle-ci l'ordre nécessaire par le conducteur 23. Chaque étage comporte à cet effet un registre à décalage 40, alimenté par les conducteurs 41 et 42 respectivement en signaux d'horloge et de chargement, tandis que le signal série est introduit en 43 afin de sélectionner la sortie du registre correspondant précisément à l'adresse de la cellule à commuter. Grâce à la liaison 22 et au circuit 21, on peut simultanément gérer d'autres informations , par exemple pour effecteur des comptages ou mettre en oeuvre des interdictions, n'autorisant la commutation que dans certaines conditions ou pour certains utilisateurs uniquement.

La Figure 10 illustre enfin, toujours dans la même variante de réalisation, la structure particulière du circuit de sélection 14, prévu sur chaque carte de sortie 5 et qui permet de transmettre au circuit émetteur 15 le seul signal reçu de la matrice à travers les cellules E, C et S, selon le processus indiqué ci-dessus.

Sur cette Figure, on retrouve le conducteur 39 de sortie de la cellule S qui transfère de la carte de commutation 3 à la carte de sortie 5 au point de contact 10 de celles-ci, le signal sélectionné, provenant ainsi selon le cas de l'une quelconque des cartes 3, 3a ... 3n et intéressant l'une quelconque des cartes 5, 5a ... 5m. Le circuit 14 comporte à cet effet n diodes 45, 45a ... 45n, montées de façon à être réunie chacune par un conducteur 44 au point 10 correspondant et à une résistance commune de polarisation 46 et à un condensateur 47, pour délivrer le signal à la sortie du circuit sur le conducteur 48 qui le renvoie à l'entrée de l'émetteur 15.

Les cellules S (Figure 6) constituent en fait dans l'exemple décrit, des générateurs de courant, commandés en tension, ce qui présente l'avantage d'éliminer toute possibilité de perturbation par la résistance du contact au point 10 des cartes 3 et 5, en particulier par la résistance en série que représente le circuit 14, ce qui permet notamment de s'affranchir des effets de la caractéristique non linéaire des diodes mises en jeu. A noter à cet égard que si aucune des cellules C d'une colonne de la matrice n'est en service, aucun courant ne sortira de la cellule S correspondante, ce qui va bloquer la diode 45 dans le circuit 14. Grâce au générateur de courant que constitue cette cellule, la légère différence de potentiel entre les cartes 5 et 3 ne vient pas s'ajouter au signal utile ; il n'y a donc aucun risque de diaphonie au niveau des cartes de sortie entre les signaux qui transitent par celles-ci.

La Figure 11 illustre une variante de réalisation du schéma électronique représenté sur la Figure 3, montrant comment s'effectue la transmission de signaux depuis une carte d'entrée 1 jusqu'à une carte de sortie 5 et par cette dernière à la ligne bifilaire 6. On a repris sur cette Figure des chiffres de référence identiques à ceux utilisés sur la Figure 3 pour désigner des organes jouant de l'une à l'autre le même rôle pour aboutir au même résultat.

En particulier, et comme illustré sur la Figure 12, les diodes en parallèle prévues dans le circuit discriminateur 14 recevant sur les conducteurs 44 à partir des points de contact 10 entre les cartes de commutation et les cartes de sortie, peuvent être remplacées ici par des interrupteurs 49, 49a ... 49 n constitués par des micro-relais électroniques appropriés par exemple du genre commutateurs analogiques CMOS, dont la commande à l'ouverture comme à la fermeture est déterminée par un ordre provenant de l'étage de conversion R associé.

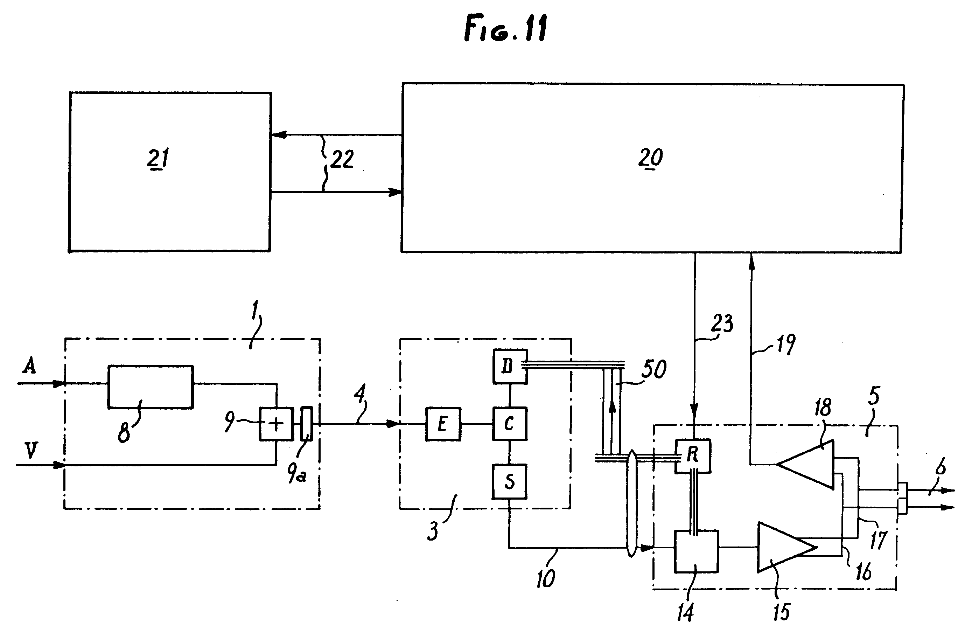

Dans cette variante cependant, cet étage de conversion R des signaux de commande assurant la commutation de la cellule C de la carte 3 est porté par la carte de sortie 5 et reçoit directement de la carte de traitement 20 les ordres correspondants par le conducteur 23. Dans ce cas, l'étage de conversion schématiquement illustré sur la Figure 13 comporte à nouveau un registre à décalage 40 avec un conducteur 41 d'amenée d'un signal d'horloge et un conducteur 42 d'amenée des signaux de chargement du registre, le signal de commande venant sélectionner l'adresse de la cellule C à commuter dans le registre étant acheminé par le conducteur 43. Le registre délivre deux séries de signaux respectivement vers le circuit de sélection 14 comme dans la précédente variante et vers un décodeur D, porté par la carte de commutation 3 associée, le signal étant transmis à celui-ci par un conducteur 50. Le décodeur D schématiquement représenté sur la Figure 14, comporte un circuit de traitement 51 des signaux reçus 50 et autant de sorties 52 que la matrice comporte de cellules C pour provoquer, selon l'ordre reçu d'un utilisateur donné, la transmission du signal sélectionné. Le décodeur D joue donc, au niveau de la fraction de matrice, le rôle de l'étage de conversion R sur la Figure 4.

## Revendications

1. Grille de commutation pour la distribution sur M sorties au choix d'un signal, notamment vidéo, selectionné parmi N signaux acheminés à des entrées sur la grille, chacune des M sorties pouvant à volonté être commutée sur une des entrées en fonction d'un signal de commande approprié, la grille de commutation comportant au moins un sous-ensemble de cartes de sortie (5) et une structure de support fixe pour un ensemble de cartes d'entrée (1) recevant chacune des signaux, notamment vidéo (V), éventuellement vidéo et/ou audio (A, V), en nombre correspondant à un sous-multiple donné du nombre total N des signaux à transmettre, ladite structure de support fixe comportant au moins un châssis ou rack (2) contenant le sous-ensemble de cartes de sortie (5) disposées en parallèle, la grille étant caractérisée en ce qu'elle comporte de plus au moins un ensemble de cartes de commutation (3), dont chacune est réunie à une carte d'entrée (1) pourvue d'autant d'entrées que de signaux reçus par carte d'entrée (1), toutes les cartes de sortie (5) d'un même sous-ensemble, en nombre égal à un sous-multiple du nombre total M de sorties, étant réunies audit ensemble de cartes de commutation (3), chaque carte de sortie (5) délivrant à un utilisateur un signal quelconque sélectionné parmi les signaux reçus par chaque carte de commutation à partir de la carte d'entrée associée, les cartes de commutation (3) comportant un ensemble de cellules d'entrée (E) montées en parallèle, en nombre égal au sous-multiple définissant le nombre de signaux à transmettre reçus par une carte d'entrée (1), et un ensemble de cellules de sortie (S), en nombre égal au sous-multiple donné pour les cartes de sortie (5), chaque cellule d'entrée et chaque cellule de sortie étant réunies par une cellule de commutation (C), laissant passer un signal selectionné de l'entrée vers la sortie sous l'effet d'un ordre de commande délivré par l'utilisateur, transitant par la carte de sortie (5) associée à celui-ci, via une carte de traitement (20) commune à l'ensemble des cartes de commutation, cette carte de traitement commandant un étage de conversion (R) des ordres reçus, ledit châssis ou rack (2) contenant l'ensemble de cartes de commutation montées en parallèle (3) et ledit sous-ensemble de cartes de sortie (5) également parallèles mais disposées perpendiculairement aux cartes de commutation, le point de contact (10) des bords ou arêtes de chaque carte de commutation avec la carte de sortie correspondante assurant la liaison entre une cellule de sortie (S) sur la carte de commutation (3) et un circuit de sélection (14) prévu sur la carte de sortie associée (5).

2. Grille de commutation selon la revendication 1, caractérisée en ce que la carte de traitement (20) est parallèle aux cartes de commutation (3) et en contact par une autre avec la carte de sortie (5).

3. Grille de commutation selon la revendication 2, caractérisée en ce que la sortie du circuit de sélection (14) est reliée à un circuit émetteur (15) restituant sur des conducteurs (16) et (17) les signaux audio et/ou vidéo avant transmission de ceux-ci sur une ligne bifilaire (6) les acheminant à distance vers un récepteur approprié.

4. Grille de commutation selon la revendication 3, caractérisée en ce que la ligne bifilaire (6) transmet en sens inverse des signaux, des ordres de télécommande reçus par un circuit de traitement (18) prévu sur la carte de sortie (5) associée, délivrant une impulsion de commande à l'entrée (19) de la carte de traitement (20), celle-ci étant montée dans le même rack (2) que les cartes de commutation (3) mais de façon séparée de ces dernières.

5. Grilles de commutation selon l'une des revendications 1 à 4, caractérisée en ce que chaque carte de commutation dans un sous-ensemble est réunie à la sortie d'une carte d'entrée par un câble coaxial (4) adapté, chaque câble acheminant un signal reçu par la carte d'entrée vers chacune des cartes de commutation du sous-ensemble correspondant, l'adaptation du câble étant réalisée à ses extrémités par la carte d'entrée (1) et par une résistance terminale (7) respectivement.

6. Grille de commutation selon les revendications 2 et 5, caractérisée en ce que, lorsque la structure de support comporte plusieurs racks (2, 2', 2"), les câbles coaxiaux (4, 4'...) sont en série d'un rack à l'autre.

7. Grille de commutation selon l'une quelconque des revendications 1 à 6, caractérisée en ce que la carte de traitement (20) des ordres de télécommande comporte un système à microprocesseur envoyant des informations série à un registre à décalage (40) délivrant un signal de commande à la cellule (C) associée.

8. Grille de commutation selon l'une des revendications 1 à 7, caractérisée en ce que chaque cellule de commutation (C) comporte deux interrupteurs éléctroniques (29, 33) montés en série et dont le point milieu est réuni à la masse par un troisième interrupteur (30), les deux premiers étant ouverts quand le troisième est fermé et vice versa.

9. Grille de commutation selon la revendication 8, caractérisée en ce que les premier et deuxième interrupteurs (29, 33) sont des diodes convenablement polarisées, le troisième interrupteur (30) étant un transistor.

10. Grille de commutation selon la revendication 9, caractérisée en ce que la diode constituant le premier interrupteur (29) est montée en série avec le collecteur du transistor constituant le troisième interrupteur (30),par un conducteur (32) réuni à la diode (33) constituant le deuxième interrupteur, cette diode étant alimentée par la sortie de l'étage de conversion (R) des ordres de commande.

11. Grille de commutation selon l'une quelconque des revendications 1 à 10, caractérisée en ce que chaque cellule de sortie (S) constitue un générateur de courant commandé en tension, comportant un transistor dont la base est réunie à la masse, recevant sur son émetteur le signal transmis par une cellule de commutation et délivrant un signal de sortie sur son collecteur.

12. Grille de commutation selon l'une quelconque des revendications 1 à 11, caractérisée en ce que les cellules d'entrée (E) et de sortie (S) constituent une matrice respectivement à lignes et à colonnes dont les points de croisement comportent chacun une cellule de commutation (C), les étages de conversion (R) commandant la commutation des cellules (C) en colonnes pour la transmission d'un signal d'une cellule d'entrée (E) vers une cellule de sortie (S).

13. Grille de commutation selon la revendication 12, caractérisée en ce que chaque cellule d'entrée (E) est une cellule à haute impédance recevant le signal provenant de la carte d'entrée (1) associée, transmis par le câble coaxial (4), cette cellule alimentant à basse impédance et en parallèle les cellules de commutation (C) d'une même ligne de la matrice.

14. Grille de commutation selon la revendication 1, caractérisée en ce que l'étage de conversion (R) est porté par la carte de sortie (5) associée et reçoit directement de la carte de traitement (20) les signaux de télécommande, l'étage de conversion série-parallèle renvoyant un signal vers la cellule de commutation (C) correspondante par l'intermédiaire d'un circuit décodeur.

15. Grille de commutation selon la revendication 1, caractérisée en ce que les composants montés sur chaque carte de commutation sont disposés dans une zone située dans le prolongement de la carte de sortie associée.

## Claims

1. A switching grid for distributing onto M outputs at choice a signal, in particular a video signal, selected from N signals conveyed to inputs on the grid, each of the M outputs being able at will to be switched onto one of the inputs as a function of an appropriate control signal, the switching grid comprising at least one subset of output cards (5) and a fixed supporting structure for a set of input cards (1) each receiving signals, in particular video signals (V), possibly video and/or audio signals (A, V), in a number corresponding to a given submultiple of the total number N of the signals to be transmitted, the said fixed supporting structure comprising at least one frame or rack (2) containing the subset of output cards (5) which are arranged in parallel, the grid being characterised in that it comprises, moreover, at least one set of switching cards (3), each of which is connected to an input card (1) provided with as many inputs as there are signals received par input card (1), all the output cards (5) of one and the same subset, in a number equal to a submultiple of the total number M of outputs, being connected to the said set of switching cards (3), each output card (5) delivering to a user any signal selected from the signals received by each switching card from the associated input card, the switching cards (3) comprising a set of input cells (E) mounted in parallel, in a number equal to the submultiple defining the number of signals to be transmitted which are received by an input card (1), and a set of output cells (S), in a number equal to the given submultiple for the output cards (5), each input cell and each output cell being connected by a switching cell (C), passing a selected signal from the input to the output under the affect of a control command delivered by the user, transiting through the output card (5) associated with this latter, via a processing card (20) which is common to the whole of the switching cards, this processing card controlling a conversion stage (R) for the commands received, the said frame or rack (2) containing the set of switching cards which are mounted in parallel (3) and the said subset of output cards (5) which are also parallel but arranged perpendicular to the switching cards, the point of contact (10) of the borders or edges of each switching card with the corresponding output card effecting the connection between an output cell (S) on the switching card (3) and a selection circuit (14) provided on the associated output card (5).

2. A switching grid according to claim 1, characterised in that the processing card (20) is parallel to the switching cards (3) and in contact through another one with the output card (5).

3. A switching grid according to claim 2, characterised in that the output of the selection circuit (14) is connected to an emitter circuit (15) restoring on conductors (16) and (17) the audio and/or video signals prior to transmission of these latter on a two-wire line (6) conveying them remotely to an appropriate receiver.

4. A switching grid according to claim 3, characterised in that the two-wire line (6) transmits, in the opposite direction to the signals, remote-control commands received by a processing circuit (18) provided on the associated output card (5), delivering a control pulse to the input (19) of the processing card (20), this latter being mounted in the same rack (2) as the switching cards (3) but in a manner separated from these latter.

5. Switching grids according to one of claims 1 to 4, characterised in that each switching card in a subset is connected to the output of an input card by an adapted coaxial cable (4), each cable conveying a signal received by the input card to each of the switching cards of the corresponding subset, the adaptation of the cable being realised at its ends by the input card (1) and by a terminal resistor (7) respectively.

6. A switching grid according to claims 2 and 5, characterised in that, when the supporting structure comprises several racks (2, 2', 2"), the coaxial cables (4, 4' ...) are in series from one rack to the other.

7. A switching grid according to any one of claims 1 to 6, characterised in that the processing card (20) for the remote-control commands comprises a microprocessor system sending items of serial information to a shift register (40) delivering a control signal to the associated cell (C).

8. A switching grid according to one of claims 1 to 7, characterised in that each switching cell (C) comprises two electronic switches (29, 23) which are mounted in series and the middle point of which is connected to earth by a third switch (30), the first two being open when the third is closed, and vice versa.

9. A switching grid according to claim 8, characterised in that the first and second switches (29, 33) are suitably polarized diodes, the third switch (30) being a transistor.

10. A switching grid according to claim 9, characterised in that the diode constituting the first switch (29) is mounted in series with the collector of the transistor constituting the third switch (30), through a conductor (32) connected to the diode (33) constituting the second switch, this diode being supplied by the output of the conversion stage (R) for the control commands.

11. A switching grid according to any one of claims 1 to 10, characterised in that each output cell (S) constitutes a voltage-controlled current generator, comprising a transistor the base of which is connected to earth, receiving on its emitter the signal transmitted by a switching call and delivering an output signal on its collector.

12. A switching grid according to any one of claims 1 to 11, characterised in that the input cells (E) and output cells (S) constitute a matrix respectively having rows and columns the points of intersection of which each comprise a switching cell (C), the conversion stages (R) controlling the switching of the cells (C) in columns for the transmission of a signal from an input cell (E) to an output cell (S).

13. A switching grid according to claim 12, characterised in that each input cell (E) is a high-impedance cell receiving the signal coming from the associated input card (1), transmitted by the coaxial cable (4), this cell supplying at low impedance, and in parallel the switching cells (C) of one and the same row of the matrix.

14. A switching grid according to claim 1, characterised in that the conversion stage (R) is carried by the associated output card (5) and receives the remote-control signals directly from the processing card (20), the series/parallel conversion stage sending a signal back to the corresponding switching cell (C) through the intermediary of a decoder circuit.

15. A switching grid according to claim 1, characterised in that the components mounted on each switching card are arranged in a zone situated in the extension of the associated output card.

## Patentansprüche

1. Schaltgitter zur Verteilung eines Signals, insbesondere eines Videosignals, auf M Ausgänge nach Wahl, wobei das Signal aus N dem Gitter an Eingängen zugeführten Signalen ausgewählt wird und jeder der M Ausgänge beliebig auf einen der Eingänge in Abhängigkeit von einem geeigneten Steuersignal geschaltet werden kann, mit wenigstens einer Baueinheit von Ausgangskarten (5) und einer festen Trägerstruktur für eine Baueinheit von Eingangskarten (1), von denen jede Signale, insbesondere Videosignale (V), evtl. Video- und/oder Audiosignale (A, V), in einer Anzahl empfängt, die einem durch die Gesamtanzahl N der zu übertragenden Signale gegebenen Teiler entspricht, wobei die genannte feste Trägerstruktur mindestens einen Rahmen (Chassis) oder ein Gestell (2) aufweist, der/das die Baueinheit von parallel zueinander angeordneten Ausgangskarten (5) enthält, dadurch gekennzeichnet, daß das Gitter ausserdem wenigstens eine Einheit von Schaltkarten (3) aufweist, von denen jede mit einer Eingangskarte (1) verbunden und mit eben so vielen Eingängen versehen ist, wie empfangene Signale pro Eingangskarte (1) vorgesehen sind, daß alle Ausgangskarten (5) einer gleichen Baueinheit, deren Anzahl gleich einem Teiler der Gesamtanzahl M von Ausgängen ist, mit der erwähnten Einheit von Schaltkarten (3) verbunden ist, daß jede Ausgangskarte (5) einem Benutzer ein beliebig aus den von jeder Schaltkarte empfangenen Signalen ausgewähltes Signal ausgehend von der zugeordneten Eingangskarte liefert, daß die Schaltkarten (3) eine Einheit von parallel zueinander montierten Eingangsgliedern (E), deren Anzahl gleich dem Teiler ist, der die Anzahl von zu übertragenden, von einer Eingangskarte (1) empfangenen Signalen bestimmt, und eine Einheit von Ausgangsgliedern (S), deren Zahl gleich dem für die Ausgangskarten (5) gegebenen Teiler ist, aufweisen, daß jedes Eingangsglied und jedes Ausgangsglied über ein Schaltglied (C) verbunden ist, daß ein ausgewähltes Signal vom Eingang zum Ausgang unter der Wirkung eines vom Benutzer abgegebenen Steuerbefehls unter Übergang auf die diesem zugeordnete Ausgangskarte (5) mit Hilfe einer der Schaltkarteneinheit gemeinsamen Verarbeitungskarte (20) durchlaufen läßt, daß die Verarbeitungskarte eine Umwandlungsstufe (R) für die empfangenen Befehle steuert, daß der genannte Rahmen bzw. das Gestell (2) die Einheit der zueinander parallel angebrachten Schaltkarten (3) und die genannte Baueinheit der gleichermaßen zueinander parallel, aber senkrecht zu den Schaltkarten angebrachten Ausgangskarten (5) enthält, und daß die Kontaktstelle (10) der Kanten oder Ränder jeder Schaltkarte mit der entsprechenden Ausgangskarte die Verbindung zwischen einem Ausgangsglied (S) auf der Schaltkarte (3) und einer auf der zugeordneten Ausgangskarte (5) vorgesehenen Auswahlschaltung (14) sicherstellt.

2. Schaltgitter nach Anspruch 1, dadurch gekennzeichnet, daß die Verarbeitungskarte (20) parallel zu den Schaltkarten (3) und durch eine andere in Kontakt mit der Ausgangskarte (5) ist.

3. Schaltgitter nach Anspruch 2, dadurch gekennzeichnet, daß der Ausgang der Auswahlschaltung (14) an eine Emitterschaltung (15) angeschlossen ist, die auf Leiter (16 und 17) die Audio- und/oder Videosignale vor einer Übertragung derselben über eine sie über eine Entfernung an einen geeigneten Empfänger weiterleitende bifilare Leitung (6) wiederherstellen.

4. Schaltgitter nach Anspruch 3, dadurch gekennzeichnet, daß die bifilare Leitung (6) in umgekehrter Richtung Fernsteuerbefehls-Signale überträgt, die von einer Verarbeitungsschaltung (18) empfangen werden, die auf der zugeordneten Ausgangskarte (5) vorgesehen ist und einen Steuerimpuls an den Eingang (19) der Verarbeitungskarte (20) liefert, die auf dem gleichen Gestell (2) wie die Schaltkarten (3) montiert ist, aber in von den letzteren getrennter Weise.

5. Schaltgitter nach einem der Ansprüche 1 - 4, dadurch gekennzeichnet, daß jede Schaltkarte in einer Baueinheit mit dem Ausgang einer Eingangskarte durch ein angepaßtes Koaxialkabel (4) verbunden ist, wobei jedes Kabel ein von der Eingangskarte empfangenes Signal zu jeder der Schaltkarten der entsprechenden Baueinheit weiterleitet und die Anpassung des Kabels an seinen Enden jeweils durch die Eingangskarte (1) und durch einen Abschlußwiderstand (7) realisiert ist.

6. Schaltgitter nach den Ansprüchen 2 und 5, dadurch gekennzeichnet, daß die Koaxialkabel (4, 4'....) in Reihe von einem Gestell zum andern liegen, sofern die Trägerstruktur mehrere Gestelle (2, 2', 2") aufweist.

7. Schaltgitter nach einem beliebigen der Ansprüche 1 - 6, dadurch gekennzeichnet, daß die Verarbeitungskarte (20) der Fernsteuerbefehle ein Mikroprozessor-System aufweist, das Serieninformationen zu einem Schieberegister (40) sendet, das ein Steuersignal an das zugeordnete Schaltglied (C) liefert.

8. Schaltgitter nach einem der Ansprüche 1 - 7, dadurch gekennzeichnet, das jedes Schaltglied (C) zwei elektronische Schalter (29, 33) aufweist, die in Reihe geschaltet sind und deren Mittelpunkt über einen dritten Schalter (30) an Masse angeschlossen ist, wobei die ersten beiden Schalter offen sind, wenn der dritte geschlossen ist, und umgekehrt.

9. Schaltgitter nach Anspruch 8, dadurch gekennzeichnet, daß die ersten und zweiten Schalter (29, 33) geeignet gepolte Dioden sind, und der dritte Schalter (30) ein Transistor ist.

10. Schaltgitter nach Anspruch 9, dadurch gekennzeichnet, daß die den ersten Schalter (29) bildende Diode in Reihe mit dem Kollektor des den dritten Schalter (30) bildenden Transistors geschaltet ist und zwar über einen Leiter (32), der mit der den zweiten Schalter bildenden Diode (33) verbunden ist, und daß diese Diode vom Ausgang der Umwandlungsstufe (R) der Steuerbefehle gespeist wird.

11. Schaltgitter nach einem beliebigen der Ansprüche 1 - 10, dadurch gekennzeichnet, daß jedes Ausgangsglied (S) einen spannungsgesteuerten Stromgenerator aufweist, der einen mit seiner Basis an Masse liegenden Transistor enthält, der über seinen Emitter das von einem Schaltglied übertragene Signal empfängt und der ein Ausgangssignal über seinen Kollektor abgibt.

12. Schaltgitter nach einem beliebigen der Ansprüche 1 - 11, dadurch gekennzeichnet, daß die Eingangsglieder (E) und Ausgangsglieder (S) jeweils eine Matrix mit Reihen und Spalten bilden, deren Schnittpunkte jeweils ein Schaltglied (C) enthalten und daß die Umwandlungsstufen (R) die Umschaltung der Schaltglieder (C) in Spalten zur Übertragung eines Signals von einem Eingangsglied (E) zu einem Ausgangsglied (S) steuern.

13. Schaltgitter nach Anspruch 12, dadurch gekennzeichnet, daß jedes Eingangsglied (E) ein hochohmiges Glied ist, welches das von der zugeordneten Eingangskarte (1) stammende, über das Koaxialkabel (4) übertragene Signal empfängt, und daß dieses Glied niederohmig und parallel die Schaltglieder (C) einer gleichen Reihe der Matrix speist.

14. Schaltgitter nach Anspruch 1, dadurch gekennzeichnet, daß die Umwandlungsstufe (R) durch die zugeordnete Ausgangskarte (5) getragen wird und direkt von der Verarbeitungskarte (20) die Fernsteuersignale empfängt und daß die Serien- Parallel- Umwandlungsstufe ein Signal zum entsprechenden Schaltglied (C) und der Zwischenschaltung einer Decodierschaltung sendet.

15. Schaltgitter nach Anspruch 1, dadurch gekennzeichnet, daß die auf jeder Schaltkarte angebrachten Komponenten in einer Zone angeordnet sind, die in der Verlängerung der zugeordneten Ausgangskarte liegt.
